# EUROPEAN PATENT APPLICATION

(11) **EP 3 708 827 A1**
(43) Date of publication of application: **16.09.2020**
(21) Application number: 18876008.6
(22) Date of filing: 17.10.2018
(51) Int. Cl.: F03D 17/00, F03D 7/00

(54) **WIND POWER GENERATION SYSTEM**

(30) Priority: 07.11.2017 JP 2017214596
(71) Applicant: Hitachi, Ltd., Tokyo 100-8280 (JP)
(72) Inventor: KUSUNO, Nobuhiro, Tokyo 100-8280 (JP); KAKUYA, Hiromu, Tokyo 100-8280 (JP); KAWASHIMA, Hideyuki, Tokyo 100-8280 (JP)
(74) Representative: Strehl Schübel-Hopf & Partner
(86) International application number: PCT/JP2018/038600
(87) International publication number: WO 2019/093084

(57) **Abstract**

Provided is a wind power generation system with which it is possible to calculate the operating rate of a wind power generation device from which factors causing a decrease in the operating rate of the wind power generation device due to a specific operator or a plurality of operators have been eliminated, without restricting the start of an on-site work by an operator and actions for ensuring safety. The wind power generation system 1 is provided with: a wind power generation device 11; a control device 10; and a remote monitoring and control device 8 which monitors and controls the running status of the wind power generation device 11. The wind power generation device 11 is provided with an operator identification device 22 which identifies the operator. The remote monitoring and control device 8 includes: an event log integrating processor 83 which integrates operator identity information and operation content from the operator identification device 22 with operation content and operator information which are input from an operating terminal 9; and an operating rate calculator 86 which, on the basis of a running state signal, an event log signal, and an operating rate calculation definition which is set in advance and can be modified by means of the operating terminal, calculates an operating rate from which an operating rate decrease factor due to a running plan modification including power generation stoppage and a fallback running performed by a specific operator has been removed.

## Description

### Technical Field

The present invention relates to a wind power generation system provided with a wind power generation device, a control device of the wind power generation device, and a remote monitoring-control device for storing an operating status of the wind power generation device. Specifically, the present invention relates to the wind power generation system suitable for application that a wind power generation device manufacturer is rewarded by the power generation provider in accordance with the operating status of the wind power generation system and/or the power generation provider is compensated by the power generation device manufacturer in accordance with the operating status of the wind power generation system.

### Background Art

The power generation provider earns profit by selling generated power to the power transmission/power distribution entity for operating the power system, and a large-scale power user such as plant in accordance with the amount of sold power. In operation of the power generation business utilizing the power generation device for receiving inputs of natural energy, for example, the wind power generation system and the solar power generation system, the natural energy cannot be controlled artificially. In order to secure the profitability of the power generation business, it is important to maintain the power generation device operable for power generation, or to enable the power generation device to generate power as estimated under the natural condition suitable for power generation.

The operating rate of the power generation device is expressed as the calculated numerical value of the operation time or power generation amount. It is defined as the ratio of the calculated numerical values between a total sum of the values derived from actual power generation and those estimated to be derived from the power generation device assumed to be normally operated if the power generation is partially or entirely stopped owing to an external or internal cause, and the calculated numerical value derived from the actual power generation. As for the wind power generation system, for example, "IEC standard No. : IEC 61400-26-1 "Time base windmill availability" and "IEC standard No. : IEC 61400-26-2 "Availability base windmill facility capacity" categorize the operation condition in accordance with the natural condition and the condition of the wind power generation device, and propose the criterion for calculating the time base operating rate and the power generation amount base operating rate in accordance with the operation time or the power generation amount for each category. The power generation provider and the power generation device manufacturer have been entrusted to determine as to which category of the operation condition is added for calculating the operating rate, and the method of obtaining the calculated values estimated to be derived from the power generation device assumed to be normally operated if the power generation is partially or entirely stopped owing to the external or internal cause.

The power generation provider demands the power generation device with high operating rate. The power generation device manufacturer has not only supplied the power generation devices, but also distributed maintenance and operation service (O & M service), offering the service contributing to higher operating rate of the power generation device. The O & M service may be undertaken by the power generation device manufacturer for making a contract as described below in addition to provision of the fixed maintenance-inspection service. That is, the manufacturer guarantees that the operating rate of the power generation device becomes the specific value or higher. If the operation rate declines below the guaranteed operating rate, the loss equivalent to the difference between the guaranteed operating rate and the actual operating rate will be compensated. Furthermore, there may be the case where the power generation device manufacturer that has accomplished the operating rate more than the specific value is rewarded by the power generation provider in accordance with the accomplished operating rate. The contract based on the operating rate as the index defines the event to be considered for the operating rate. In order to calculate the compensation and the reward utilizing the operating rate as the index, it is important to determine which of the power generation provider and the power generation device manufacturer is responsible for the decrease or increase in the operating rate of the power generation device.

The power generation device such as the wind power generation system and the solar power generation system is configured to allow the control device thereof to independently perform power generating operation in accordance with the natural condition. Accordingly, there are few cases that the operator for operating the power generation device on site where the power generation device is installed is always available for monitoring. The control device transmits the information relating to the operation condition of the power generation device, for example, the log, alarm, error to the remote monitoring-control device that serves to collect the information transmitted from the plurality of power generation devices. The remote monitoring-control device is accessible from a plurality of operating terminals simultaneously. The operator is identified by the user authentication process upon accessing. The operator monitors the conditions of the power generation device group, and is allowed to perform operations for stopping activation of the power generation device, changing setting of the operation method as needed. Normally, the remote monitoring-control device is capable of recording the operator and the operation content as the log. The power generation device manufacturer specifies the unpreferable condition of the power generation device, and makes the function of outputting alarm and error available. If the responsible operator fails to cope with the alarm and the error, such operator is identified as being responsible for decrease in the operating rate of the power generation device as the cause of the alarm and the error. Accordingly, this may verify that the power generation device manufacturer is not responsible for such defect in the product. The above-described activities are described in the patent literature 1.

As disclosed in the patent literature 1, if the operation condition of the wind power generation device, which has been acquired by the sensor reaches or exceeds the threshold indicating the unsafe condition, the alarm signal is displayed on the screen, or output by a sound for warning the operator. If the operator continues operating the wind power generation device while ignoring the alarm signal, the manufacturer of the wind power generation device may be exempted from responsibility for guarantee based on the act of the operator in reference to the sensor data stored in the mass storage device.

### Citation List

### Patent Literature

Patent Literature 1: US Publication No. 2012/0029843

### Summary of Invention

### Technical Problem

The technique as disclosed in the patent literature 1 allows the remote monitoring-control device to record the operator and the operation content. However, there may be the case that the power generation needs to be stopped owing to various causes such as the maintenance-inspection work on the power generation facility, external audit or preliminary inspection of the power generation device, request from the management of the electric power system connected to the power generation device besides the outputting of the alarm or the error. The record on the operator and the operation content concerning the operation executed by the control device of the power generation device on site cannot be retained. The only information such as the log, alarm and error to be output from the control device to the remote monitoring-control device may be recorded in the remote monitoring-control device. In order to make sure who is responsible for decrease in the operating rate resulting from power generation stoppage through the operation as described above, the record has to be confirmed using another method, for example, preliminary written notice for operation, the subsequent report of the operation content, or interview with the operator. Therefore, the resultant work cost increase has to be solved.

On-site operation via the operating terminal of the remote monitoring-control device is one of solutions for recording the operator and the operation content. It is necessary to provide the operating terminal of the remote monitoring-control device for the power generation device, or to carry the portable operating terminal. The problems of the complex component structure, the cost increase or the work cost increase have to be solved as well. Addition of the operation item that is not directly related to the one relevant to the work conducted on-site may cause the operation forgetfulness. The solution as described above is not preferable to securely identify the responsibility for decrease in the operating rate. Unlike the case of the remote operation, the operation of the power generation device on site is intended to secure safety of the operator. For example, if emergency stop of the operation of the power generation device is necessary for securing safety of the operator, the operation of the power generation device may be stopped by operating such mechanism as the emergency stop button. In this case, in order to place the highest priority on safety of the operator, the user authentication procedure upon access to the remote monitoring-control device via the operating terminal has to be omitted.

It is an object of the present invention to provide the wind power generation system capable of calculating the operating rate of the wind power generation device by eliminating the cause of decreasing the operating rate of the wind power generation device by a specific operator or operators without limiting operations performed by the operator for starting the on-site work, and ensuring safety.

### Solution to Problem

In order to solve the above-described problems, the wind power generation system includes a wind power generation device for generating power utilizing rotation energy derived from rotation of a blade, a control device for controlling the wind power generation device, and a remote monitoring-control device for monitoring and controlling an operation state of at least one or more wind power generation devices. The remote monitoring-control device is mutually communicable with at least one or more operating terminals. The wind power generation device includes an operator identification device for acquiring information for identifying an operator who operates the wind power generation device. The remote monitoring-control device includes an event log integrating processor that integrates the operator identification information from the operator identification device and an operation content, which are received by the control device, and an operation content and information of the operator, which are input from the operating terminal for generating an event log signal, and an operating rate calculation unit for calculating an operating rate by excluding a cause of decreasing the operating rate as a result of change in an operation mode plan including a power generation stopping operation and a fallback operation, performed by a specific operator based on accumulated operation condition signals of the wind power generation device, transmitted from the control device, the event log signal, and a preset operating rate calculation definition which is variable by the operating terminal.

### Advantageous Effects of Invention

The present invention is capable of providing the wind power generation system capable of calculating the operating rate of the wind power generation device by eliminating the cause of decreasing the operating rate of the wind power generation device by a specific operator or operators without limiting operations performed by the operator for starting the on-site work, and ensuring safety.

The problem, structure, and advantageous effects other than those described above will be clarified by the description of the embodiment as below.

### Brief Description of Drawings

Fig. 1 schematically shows an overall structure of a wind power generation system according to an embodiment of the present invention.
Fig. 2 is a schematic function diagram of a remote monitoring-control device as shown in Fig. 1.
Fig. 3 shows an example of a display screen indicating how an event log is recorded.
Fig. 4 shows an example of a display screen indicating how an operation condition log is recorded.
Fig. 5 shows an example of a process set screen for calculating the operating rate.
Fig. 6 shows an example of a display screen indicating the operation condition log and the operating rate.
Fig. 7 is an explanatory view of an operation performed by an operator identification device as a first example according to the embodiment of the present invention.
Fig. 8 is an explanatory view of an operation performed by an operator identification device as a second example according to another embodiment of the present invention.
Fig. 9 is a view indicating a transitional state of the operation screen of the operator identification device as the second example according to another embodiment of the present invention.

### Description of Embodiment

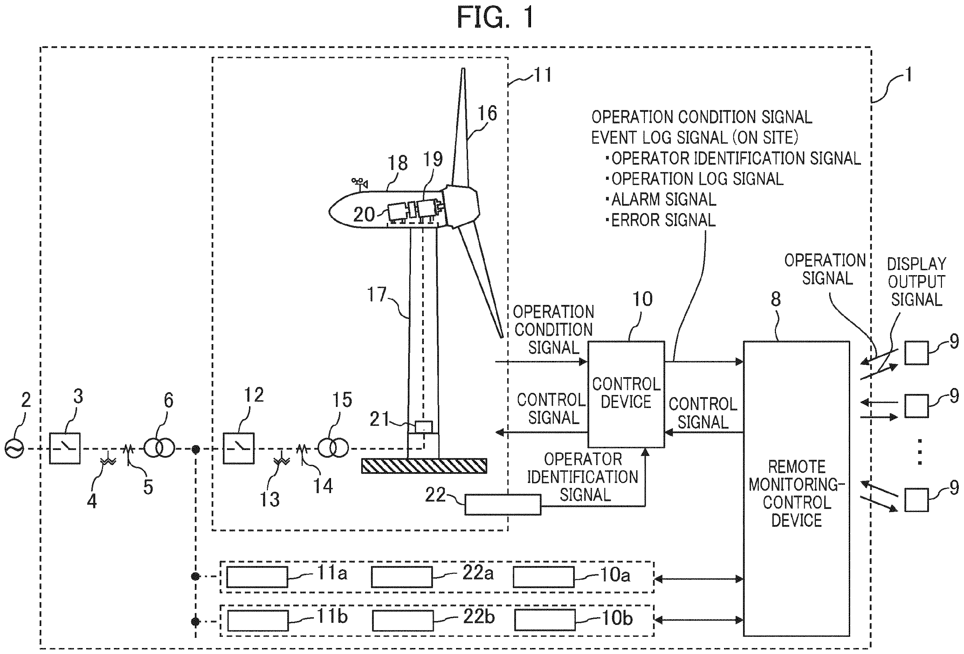

Fig. 1 schematically shows an overall structure of a wind power generation system according to an embodiment of the present invention. As Fig. 1 shows, a wind power generation system 1 at least includes a single wind power generation device 11, a control device 10 for controlling the wind power generation device 11, and collecting an operation condition signal of the wind power generation device 11, an operator identification device 22 to be described later, and a remote monitoring-control device 8 inter-communicably connected to the control device 10. If the wind power generation system 1 is constituted by a plurality of wind power generation devices (11, 11a, 11b), each of the wind power generation devices (11, 11a, 11b) is provided with a disconnector or a circuit breaker 12, a voltmeter 13 and an ammeter 14 for detecting a power generation output, and a transformer 15 for voltage boosting for the purpose of reducing the transmission loss. Outputs of the respective wind power generation devices (11, 11a, 11b) are collected, and connected to a power system 2 via an interconnection disconnector or a circuit breaker 3 for interconnection, an interconnection voltmeter 4 and an interconnection ammeter 5 for detecting an output of the wind power generation system 1, and an interconnection transformer 6 for voltage boosting for the purpose of reducing the transmission loss. The generated power amount as the calculation basis of the profit of sold electric power of the wind power generation system 1 is calculated by the interconnection voltmeter 4 and the interconnection ammeter 5. The generated power amount to be calculated by the voltmeter 13 and the ammeter 14 provided for each of the wind power generation devices (11, 11a, 11b) is used for calculating each operating rate of the wind power generation devices (11, 11a, 11b).

The wind power generation device 11 includes a hub having a rotary shaft, and a rotatable rotor constituted by at least a single blade 16 attached to the hub. The rotor is rotatably supported with a nacelle 18 via the rotary shaft. The rotation energy of the rotor is input to a speed increaser 19 connected to the rotary shaft for accelerating the rotational speed, and a generator 20, both of which are stored in the nacelle 18. The generator 20 converts the rotation energy into the electrical energy. The electrical energy is converted into power corresponding to the frequency of the power system 2 by a power converter 21 disposed at a leg part of a tower 17, which is electrically connected to the generator 20. The speed increaser 19 may be omitted depending on the specification of the wind power generation device 11.

The control device 10 serves to control the wind power generation device 11 and collect the operation condition signals of the wind power generation device 11. Upon detection of establishment of the wind condition suitable for the power generating operation, the control device 10 controls so that the wind power generation device 11 is brought into the state suitable for starting power generation. The disconnector or the circuit breaker 12 is closed to start the power generating operation. During the power generating operation, the control device 10 refers to the rotational speed of at least the blade 16 or the generator 20 to control the power converter 21, a pitch angle controller (not shown) for adjusting a blade angle of the blade 16, and a yaw angle controller (not shown) for adjusting a nacelle azimuth of the nacelle 18 so that the kinetic energy of wind is converted into the maximum electrical energy. The control device 10 stops the power generating operation of the wind power generation device 11 to close the above-described disconnector or the circuit breaker 12, and transmits the alarm signal or the error signal to the remote monitoring-control device 8 in the cases in which: during the power generating operation, the wind condition is transferred to the condition incompatible with the power generating operation; and it is determined that each device is in an inappropriate condition (alarm state) or clearly in an abnormal state (error state) from the operation condition signal transmitted from the respective devices constituting the wind power generation device 11 via a sensor (not shown),

As described above, the control device 10 constantly detects conditions of the wind power generation device 11 not only rotational speeds of the blade 16 or the generator 20 required to be controlled during power generating operation, the blade angle, and the nacelle azimuth, but also generated power calculated from detected values of the voltmeter 13 and the ammeter 14, temperature and vibration of each of the components, and an opened/closed state of the disconnector or the circuit breaker 12 so that those signals are transmitted to the remote monitoring-control device 8. The transmission signal is constituted by an operation condition signal obtained by executing appropriate mathematical process as needed, for example, converting the condition signal of the devices for forming the wind power generation device 11 into a statistic such as an average value or a standard variance, an event log of the activity such as start or stop of power generation, and an alarm signal or an error signal for alarming modulation or abnormality in each unit constituting the wind power generation device 11.

It is possible to dispose the control device 10 either at the lower section inside the tower 17 (leg part of the tower 17), or outside the wind power generation device 11.

At least one remote monitoring-control device 8 disposed in the wind power generation system 1 collects reception signals from the control devices (10, 10a, 10b) of the plurality of the wind power generation devices (11, 11a, 11b) so that those signals are recorded and stored. It is possible to visualize the time-series variation in the recorded reception signal as a trend graph, execute stopping activation of the respective wind power generation devices (11, 11a, 11b), and change the respective control variables of the control devices (10, 10a, 10b) of the respective wind power generation devices (11, 11a, 11b) in accordance with the operation of the operating terminal 9. Normally, the remote monitoring-control device 8 is accessible from a plurality of operating terminals 9. In accessing, the operator is identified by the user authentication process. Contents of operations performed by the operating terminal 9, especially, operations for stopping activation of the wind power generation devices (11, 11a, 11b), or changing the control to be executed by the control device 10 are recorded as the event log while being linked with the operator and the execution date. In this case, for example, change in the respective control variables, change or updating of the control program by itself, or updating may be regarded as the control change operation of the control device 10.

The control device 10 for the wind power generation device 11 according to the embodiment of the present invention allows the operator identification device 22 as hardware to be disposed in the wind power generation device 11 as the mechanism for identifying the operator not only in the case where the operator accesses the remote monitoring-control device 8 via the operating terminal 9, but also in the case where the operator physically accesses the wind power generation device 11 or the control device 10. Alternatively, such device is installed in the control device 10 as software. The operator identification device 22 is configured to allow execution of the specific operation without requiring the access operation such as the preliminary user authentication process. This allows identification of the operator without interference with the operator's operation. An example will be described about the specific structure of the operator identification device 22 in detail. In the case where the operator identification device 22 is disposed in the wind power generation device 11 as hardware, the operator identification device 22 is provided on the door of the tower 17 constituting the wind power generation device 11 or the door of the housing for storing the disconnector or the circuit breaker 12, for example. Alternatively, it is possible to dispose the operator identification device 22 outside the wind power generation device 11.

The operator identification device 22 transmits an operator identification signal to the control device 10 together with the operation condition signal relating to the operation or the event log signal. The control device 10 transmits the operator identification signal having the operation condition signal relating to the operation or the event log signal appended to the remote monitoring-control device 8.

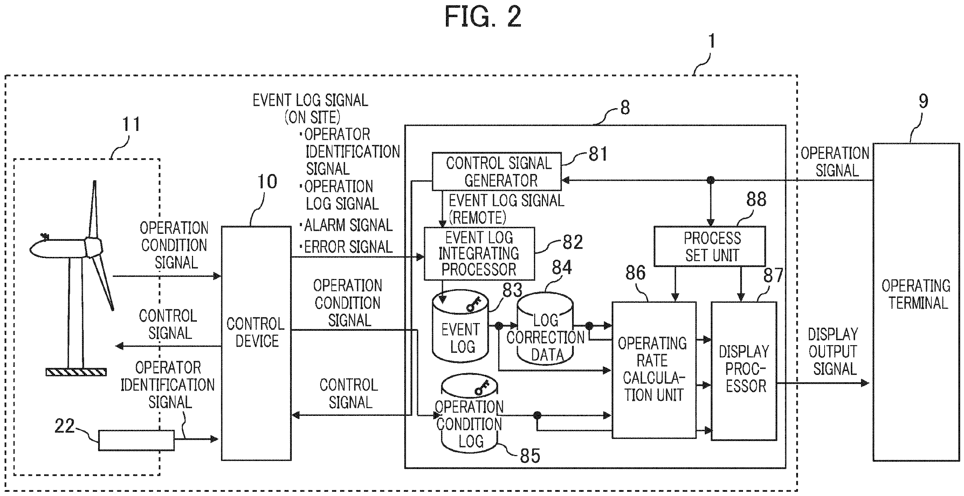

Functions of the remote monitoring-control device 8 will be described referring to Figs. 2 to 5. Fig. 2 is a function diagram of the remote monitoring-control device as shown in Fig. 1. As Fig. 2 shows, the remote monitoring-control device 8 includes a control signal generator 81, an event log integrating processor 82, an event log 83, log correction data 84, an operation condition log 85, an operating rate calculation unit 86, a display processor 87, and a process set unit 88. The control signal generator 81, the event log integrating processor 82, the operating rate calculation unit 86, the display processor 87, and the process set unit 88 are implemented by a processor such as a not shown CPU (Central Processing Unit), a ROM for storing various programs, a RAM for temporarily storing the data in a calculation process, and a storage unit such as an external storage unit. The processor such as the CPU reads and executes various programs stored in the ROM, and the arithmetic operation results derived from execution of the programs are stored in the RAM or the external storage unit.

The control signal generator 81 receives the operation signal of the remote monitoring-control device 8, which has been input from the operating terminal 9, and outputs the event log signal (remote) to the event log integrating processor 82, and the operation signal of the remote monitoring-control device 8, which has been input from the operating terminal 9 to the control device 10 as the control signal to the wind power generation device 11.

The event log integrating processor 82 integrates the event log signal (remote) input from the control signal generator 81, and the event log signal (on-site) of the wind power generation device 11 received from the control device 10, and both the on-site operation and the remote operation are recorded as the event logs in the event log 83.

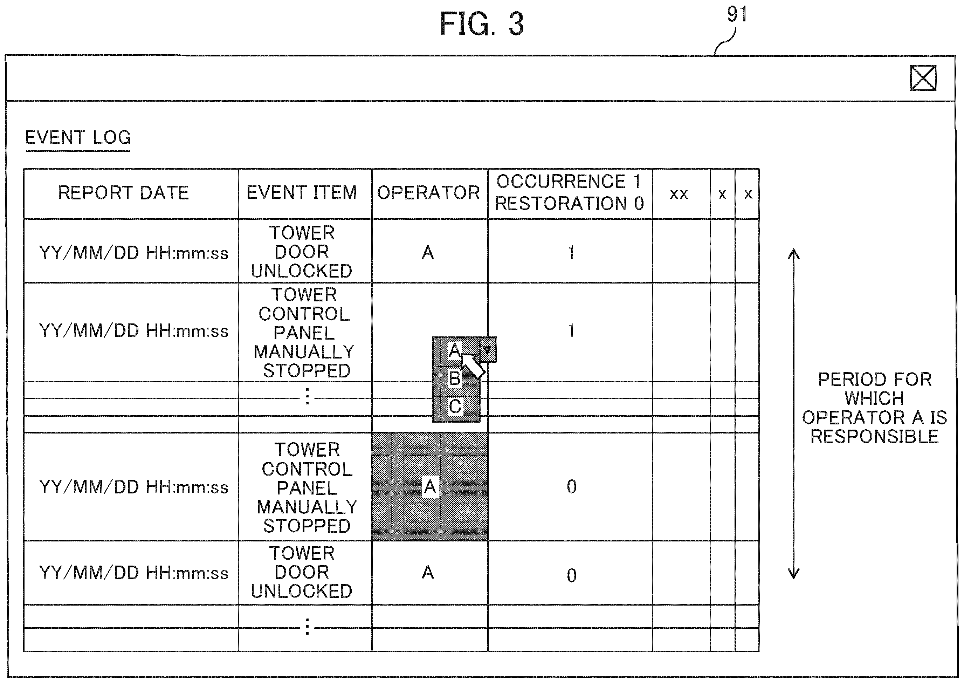

An example case of event log recording (example of data structure) will be described. Fig. 3 shows an example of displaying the event log recording form. Referring to Fig. 3, the display processor 87 displays the event log on a display screen 91 of the display unit of the operating terminal 9. The event logs including at least a "REPORT DATE" of the event, "EVENT ITEM", "OPERATOR" relevant to the event, and "OCCURRENCE 1, RESTORATION 0" indicating occurrence and restoration (release of the state where the event has occurred) of the event are mutually correlated in the table. The event log having the data structure as shown in Fig. 3 is stored in the event log 83 constituting the remote monitoring-control device 8. The operator to be stored in the column "OPERATOR" is recorded in the event log 83 (Fig. 2) based on the signal from the above-described operator identification device 22 or the user authentication process upon access to the remote monitoring-control device 8 from the operating terminal 9. There may be the case where the column is kept blank, indicating that the operator cannot be always identified by the event item, for example, the error signal or the alarm signal generated in the power generating operation. In other words, there is the event item that involves the operator, and the event item that does not involve the operator. For example, the event item that involves the operator includes an operator's opening/closing operation of the door of the tower 17, or manual operation for stopping the control panel. The event item that does not involve the operator includes the information indicating the automatic operation of the wind power generation device 11. It is also possible to record the information relevant to the event item in the event log 83 as needed.

Fig. 3 is a table showing the event log data structure. However, such information may be stored in an arbitrary form adapted to the computer processing in a non-restrictive manner.

The event logs will be recorded in the event log 83 as a pair of occurrence and restoration so long as the device group constituting the wind power generation system 1 is normally operated. In the case of the event item relevant to the operator to be identified, the operator relevant to the event item for the longest time within the period from the occurrence to the restoration is determined as the responsible operator in the period. Referring to the example of Fig. 3, the period taken for paired operations to unlock the tower door as the "EVENT ITEM" is the longest. Therefore, the responsible operator within the period is determined as A in the column of the "OPERATOR". The event log displayed on the display screen 91 of the display unit of the operating terminal 9 has a function for correcting the operator. Fig. 3 shows an example that the operator correction function is implemented in a pull-down form. In association with correction performed by the operator in any one of the "OCCURRENCE 1" and "RESTORATION 0" of the "EVENT ITEM", the operator in the corresponding "EVENT ITEM" is also modified. Referring to Fig. 3, the "OPERATOR" of the "TOWER CONTROL PANEL MANUALLY STOPPED" as the "EVENT ITEM", and in the "OCCURRENCE 1" of the "OCCURRENCE 1, RESTORATION 0" is changed to "A". The screen shows that the "OPERATOR" in the "TOWER CONTROL PANEL MANUALLY STOPPED" as the "EVENT ITEM", and in the "RESTORATION 0" of the "OCCURRENCE 1, RESTORATION 0" has been changed to "A". This makes it possible to adjust so that the operator relevant to occurrence and restoration of the "EVENT ITEM" is always kept identical. The operator may be changed on the basis of consultation between the power generation provider and the power generation device manufacturer. This makes it possible to cope with the need of emergency operation for protecting the wind power generation device 11 irrespective of the operator.

As the change of the operator influences the calculation result of the operating rate, it is preferable to store the corrected log in the log correction data 84 (Fig. 2), and to store the original event log in the uneditable recording format. It is possible to store only the different part as the log correction data.

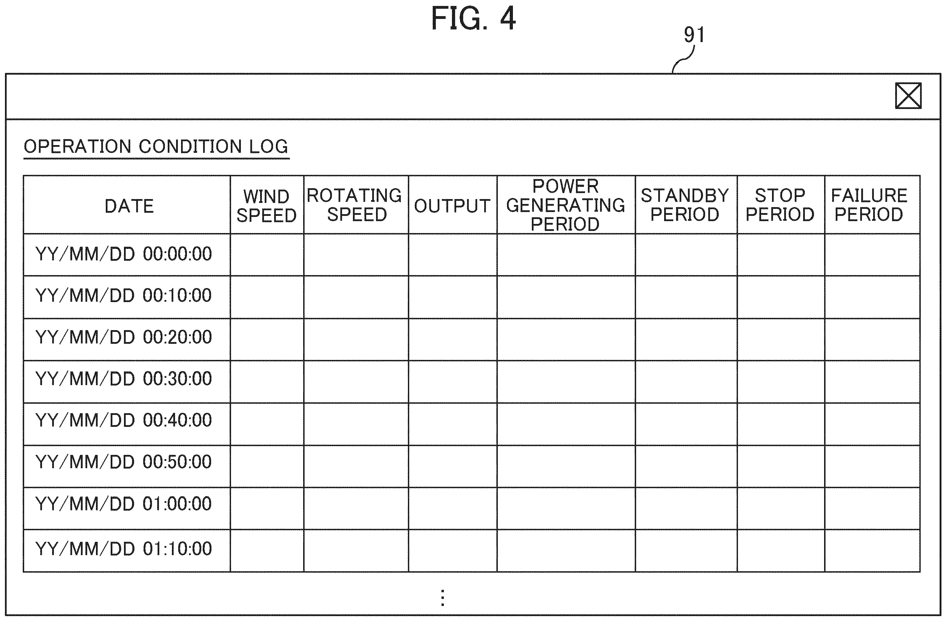

An explanation will be made on an example of a recording form (example of data structure) of the operation condition log as an archive of operation condition signals input to the remote monitoring-control device 8. Fig. 4 shows an example of a display screen indicating the recording form of the operation condition log. As Fig. 4 shows, the display processor 87 displays the operation condition log on the display screen 91 of the display unit of the operating terminal 9. The operation control log includes at least the "DATE", "WIND SPEED" as the information on the wind condition such as the wind speed and wind direction of the wind power generation device 11, "ROTATIONAL SPEED" of the blade 16 and the generator 20, "OUTPUT" of the wind power generation device 11, "POWER GENERATION PERIOD", "STANDBY PERIOD" taken for standby until establishment of the wind condition suitable for power generation, "STOP PERIOD" for which the power generation has been stopped, and "FAILURE PERIOD" for which any one of the units constituting the wind power generation device 11 is in the failure state, while being mutually correlated. The operation condition log 85 (Fig. 2) that constitutes the remote monitoring-control device 8 records the event log with the data structure as shown in Fig. 4.

The operation condition log is recorded in the operation condition log 85 at predetermined time intervals (predetermined cycle). Fig. 4 shows an example that the predetermined time interval is set to 10 minutes. Referring to Fig. 4, the operation condition log records the "WIND SPEED" as the information on the wind condition of the wind power generation device 11 such as the wind speed and the wind direction as the exemplified case, the "ROTATIONAL SPEED" of the blade 16 or the generator 20 as the information on the operation conditions of the respective components of the wind power generation device 11, the information on outputs of the wind power generation device 11, the "POWER GENERATING PERIOD", "STANDBY PERIOD", "STOP PERIOD" as the information indicating how the wind power generation device 11 is maintained under what operation condition at the recorded predetermined time intervals (predetermined cycle), and the "FAILURE PERIOD" as the information on the period for which any one of the devices constituting the wind power generation device 11 has been in the failure state. The information to be recorded is not limited to those described above, but the additional item may be set as needed. It is possible to record an instantaneous value at each time interval as the information on the operation condition that fluctuates in the predetermined time interval. It is also possible to record the average value or standard variance in the predetermined time interval as needed.

Fig. 4 shows the table of the data structure of the operation condition log. However, such log may be arbitrarily stored so long as the storage form is suitable for the computer processing. As the operation condition log influences calculation of the operating rate, it is preferable to store such log in the uneditable recording format.

The operating rate calculation unit 86 inputs the above-described operation condition log, the event log and/or the log correction data so that the process set unit 88 calculates the operating rate based on the process set for calculating the operating rate. In other words, the process set unit 88 stores a preset operating rate calculation definition. The operating rate calculation definition to be stored is variable via the operating terminal 9. Based on the operating rate calculation definition, the operating rate calculation unit 86 calculates the operating rate from the above-described operation condition log, the event log and/or the log correction data.

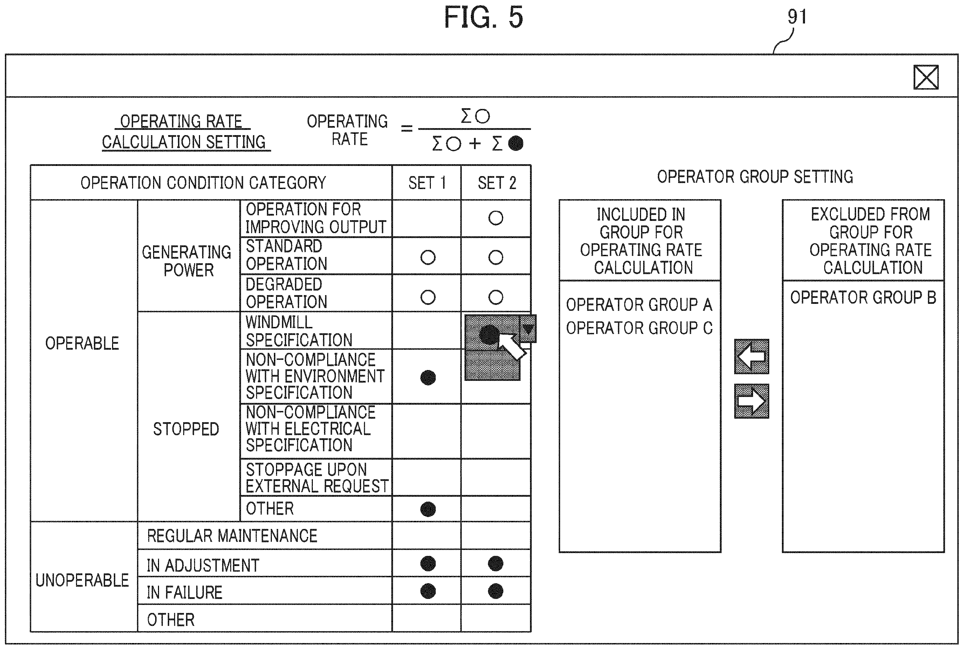

An explanation will be made on the process set for operating rate calculation. Fig. 5 shows an example of the screen displaying the process set for operating rate calculation. As Fig. 5 shows, the display screen 91 of the display unit of the operating terminal 9 as displayed by the display processor 87 includes a display region (first display region) showing which one of the operation condition categories of the wind power generation device 11 is added to the operating rate calculation in the pull-down form based on the information of the event log and the operation condition log. The screen has a function capable of storing a plurality of settings for comparison of the operating rates under different conditions simultaneously. The operation condition category as shown in Fig. 5 includes a broad classification such as "OPERABLE" and "UNOPERABLE", and a middle classification such as "GENERATING POWER", "STOPPED", "REGULAR MAINTENANCE", "IN ADJUSTMENT", and "IN FAILURE". The "GENERATING POWER" in the middle classification is further categorized into "OPERATION FOR IMPROVING OUTPUT", "STANDARD OPERATION", and "FALLBACK OPERATION". The "STOPPED" in the middle classification is further categorized into "WINDMILL SPECIFICATION", "NON-COMPLIANCE WITH ENVIRONMENT SPECIFICATION", "NON-COMPLIANCE WITH ELECTRICAL SPECIFICATION", and "STOPPAGE UPON EXTERNAL REQUEST". Classification of the operation condition category is not limited to the example as shown in Fig. 5, but may be arbitrarily changed in accordance with the specification of the wind power generation device to which the embodiment of the present invention is applied, and the standard prescribed in the country and region where the wind power generation device is operated. Fig. 5 shows an example that the "STANDARD OPERATION", "FALLBACK OPERATION", "NON-COMPLIANCE WITH ENVIRONMENT SPECIFICATION", "OTHER", "IN ADJUSTMENT", and "IN FAILURE" are set in the "SET 1". The "OPERATION FOR IMPROVING OUTPUT", "STANDARD OPERATION", "FALLBACK OPERATION", "WINDMILL SPECIFICATION", "IN ADJUSTMENT", and "IN FAILURE" are set in the "SET 2".

The display screen 91 further includes a display region (second display region) capable of setting the operator having the event log included for calculating the operating rate. It is important to set the operator to be excluded from the group guaranteed for the operating rate especially in the case of the assurance contract of the operating rate. Normally, decrease in the operating rate caused by the operation of the power generation provider is not guaranteed. Referring to the example as shown in Fig. 5, the operator group B indicating the power generation provider is set to be excluded from the group for the operating rate calculation. The content set on the process set screen for the operating rate calculation as shown in Fig. 5 is input to the process set unit 88 (Fig. 2) constituting the remote monitoring-control device 8.

An operating rate calculation method conducted by the operating rate calculation unit 86 constituting the remote monitoring-control device 8 as shown in Fig. 2 will be described. The operating rate calculation unit 86 executes the operating rate calculation in accordance with the calculation method as proposed by IEC standard No. : IEC 61400-26-1 "Time base windmill availability" or IEC standard No. : IEC 61400-26-2 "Availability base windmill facility capacity". The time base operating rate calculation as specified by IEC standard No. : IEC 61400-26-1 "Time base windmill availability" may be executed based on the cumulative time for each of the operation condition categories. When the wind power generation device 11 is stopped or in the fallback operation, calculation of the operating rate based on the power generation output as specified in IEC standard No. : IEC 61400-26-2 "Availability base windmill facility capacity" requires calculation of the power generation output of the wind power generation device 11 in the stopped state or the fallback operation state, which is estimated on the assumption that the wind power generation device 11 is normally operated. The power generation output may be estimated in accordance with the wind speed measured in the stopped state or in the fallback operation state from the correlation of the power generation output to the wind speed measured by the nacelle 18, which is calculated from the past operation condition log. It is possible to use the relation of the power generation output to the wind speed of the wind power generation device 11 as specified in the catalog. It is also possible to refer to the average value of the power generation outputs of the wind power generation device 11 that has been normally operated in the same period. The method of calculating the estimated power generation output is supposed to be established according to the agreement between the power generation provider and the power generation device manufacturer, and detailed explanations thereof, thus will be omitted.

A denominator "∑●" of the operating rate = ∑○/(∑○ + ∑●) as shown in Fig. 5 denotes the power generation output of the wind power generation device 11 that is assumed to be generated by continuous operation in the period for which the power generation device manufacturer stops the wind power generation device 11. The "∑○" refers to the actual power generation output of the wind power generation device 11.

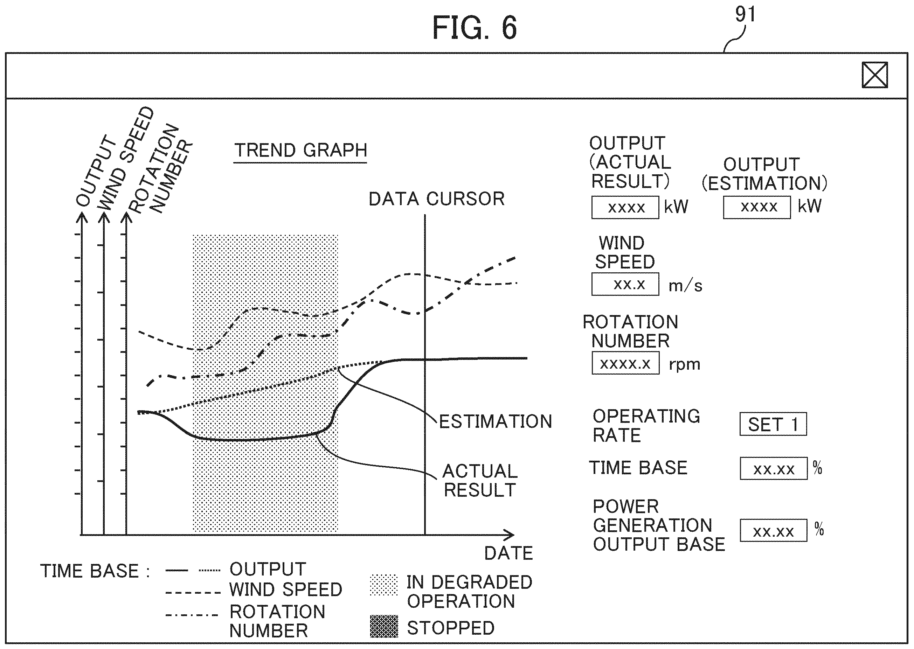

The display processor 87 constituting the remote monitoring-control device 8 as shown in Fig. 2 has a function for visualizing the data in the remote monitoring-control device 8 in association with the operation of the operating terminal 9 to the remote monitoring-control device 8. Fig. 6 shows an example of the display screen displaying the operation condition log and the operating rate on the display screen 91 of the operating terminal 9. As Fig. 6 shows, at least the operating rate is displayed as the numerical value. It is possible to display the information in the table for a daily basis, monthly basis, and an annual basis, or in the form in combination of the table with the trend graph (time-series graph). Referring to the example of Fig. 6, on the process set screen for operating rate calculation (Fig. 5), numerical values of the operating rate are displayed indicating both the time base operating rate and the power generation output base operating rate in the case where the operation condition category for calculating the operating rate corresponds to the "SET 1". Instead of displaying both the time base operating rate and the power generation output base operating rate as numerical values, any one of those operating rates may be displayed as the numerical value.

The operation condition log is displayed as the trend graph (time-series graph), taking an x-axis as the date, and a y-axis as the operation condition log data. Preferably, a plurality of log data displaying the trend are selectable. Referring to the example of Fig. 6, the "OUTPUT", "WIND SPEED", and "ROTATION NUMBER" are set as the operation condition log data on the y-axis. As for the operation condition category, it is preferable to display the corresponding period by hatching on the trend graph (time-series graph). A data cursor is set on the trend graph (time-series graph) to display numerical values of the respective operation condition log data (operation condition signals) at the date designated by the data cursor on the region at the right side of the display screen 91. Specifically, numerical values of the "OUTPUT (ACTUAL RESULT)" and "OUTPUT (ESTIMATED RESULT)" of the wind power generation device 11, the "WIND SPEED" as the information on the wind condition, and the "ROTATION NUMBER" of the blade 16 or the generator 20 are displayed. This makes it possible to visually confirm the operating rate of the wind power generation device 11 as well as the operation condition of the wind power generation device 11 as a basis for calculating the operating rate, and the operation condition category processed by the remote monitoring-control device 8. In Fig. 6, three kinds of the operation condition log data, that is, the "OUTPUT", "WIND SPEED", and "ROTATION NUMBER" are displayed as the operation condition log data on the y-axis of the trend graph (time-series graph). However, the data are not limited to those described above. It is possible to display one of the operation condition log data on the y-axis of the trend graph (time-series graph), for example, the "OUTPUT" or the "ROTATION NUMBER" among the operation condition log data. In other words, it is possible to display at least one or more operation condition log data on the y-axis of the trend graph (time-series graph).

Referring to the drawings, an explanation will be made on the operator identification device 22 constituting the wind power generation system 1 according to the embodiment of the present invention for identifying the operator without limiting operations to start the work on-site, and secure safety.

### First Example

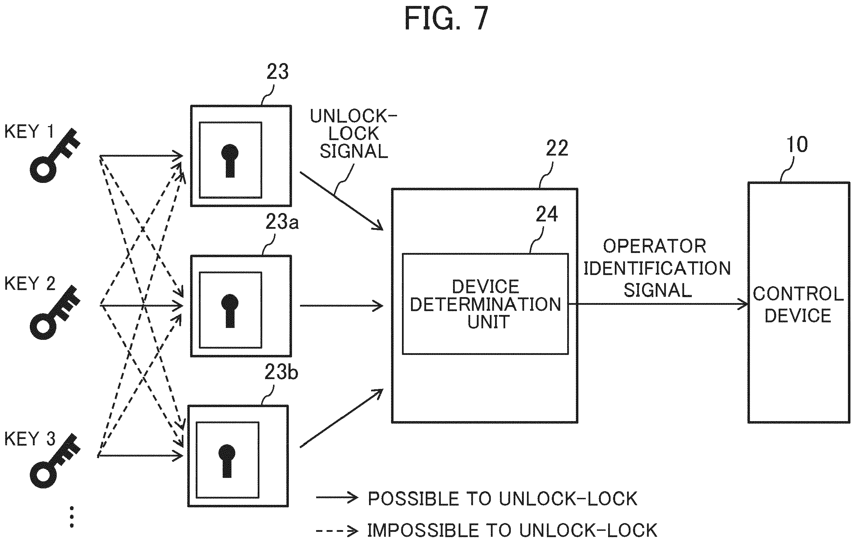

Fig. 7 is an explanatory view of operations of the operator identification device 22 as a first example according to the embodiment of the present invention. As Fig. 7 shows, the operator identification device 22 of the example includes a device discriminator 24. The operator identification device 22 receives unlock-lock signals from a plurality of operation target devices (23, 23a, 23b) of the same type. The device discriminator 24 determines the operation target device (23, 23a, 23b) as the transmission source of the received unlock-lock signal. Then a resultant operator identification signal is transmitted to the control device 10 of the wind power generation device 11. Normally, the wind power generation device 11 is provided with a key for locking the door of the tower 17, the door of the housing for storing the disconnector or the circuit breaker 12, or the building having the disconnector or the circuit breaker 12 disposed for the reason of burglar prevention and security. Execution of the on-site work always involves at least the work for unlocking the door of the tower 17 for access to the wind power generation device 11, or open-circuit of the disconnector or the circuit breaker 12 for securing safety of the worker (operator). A plurality of doors of the tower 17, disconnectors or the circuit breakers 12 (hereinafter referred to as the operation target device) are provided to allow the operators or the operator group to use keys different from one another (including an electronic key such as a card key). This makes it possible to demand the use of the specific operation target device (23, 23a, 23b) forcibly. That is, the operation target device 23 may be unlocked or locked only by a key 1 as a physical medium. The operation target device 23a may be unlocked or locked only by a key 2 as the physical medium. The operation target device 23b may be unlocked or locked only by a key 3 as the physical medium. This makes it possible to acquire an identification signal for identifying the operator by essentially required operation for the on-site work.

As the unlock process normally involves the lock process, it is possible to confirm the start and the end of the operation. The event logs form a pair for clarifying the period for which the operator is responsible for the operation.

Furthermore, it is possible to add the flag function corresponding to a prenotification of unlocking (reservation of unlocking) to the remote monitoring-control device 8. The authentication process such as a password is normally provided for the access from the operating terminal 9 to the remote monitoring-control device 8. Matching confirmation is performed between the ID (identification information) of the operator who has preliminarily brought the unlocking work prenotification flag into On state and the ID (identification information) of the operator who has unlocked so as to prevent impersonation of the operator using the duplicated key as the physical medium.

In the example as described above, the operator or the operator group is forcibly required to use the specific operation target device. This makes it possible to acquire the identification signal for identifying the operator in the required process on-site without limiting the operation for starting the on-site work, and securing safety. The above-described operator identification device provided for the wind power generation system allows calculation of the operating rate of the wind power generation device by excluding the cause of decreasing operating rate of the wind power generation device owing to the specific operator or a plurality of operators without limiting the operations of the operator for starting the on-site work, and securing safety.

Furthermore, the impersonation of the operator may be prevented, thus making it possible to ensure security of the wind power generation system.

### Second Example

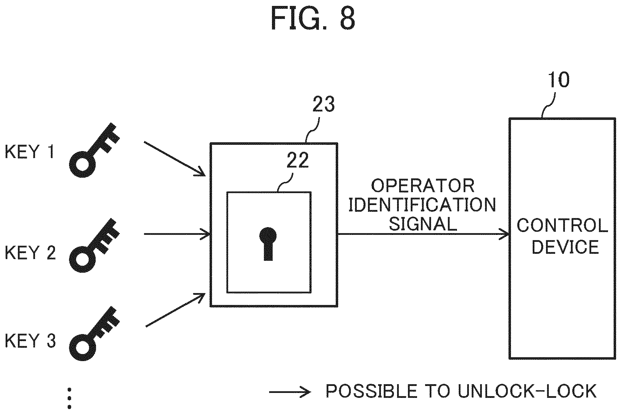

Fig. 8 is an explanatory view representing an operation of the operator identification device 22 as a second example according to another embodiment of the present invention. This example is different from the first example in that the operation target device 23 is provided with the operator identification device 22, and the same operation target device 23 may be unlocked and locked by the plurality of different keys. In Fig. 8, the same components as those of the first example are designated with the same reference signs.

As Fig. 8 shows, the operation target device 23 is provided with the operator identification device 22, and has a function that allows unlocking and locking by the keys (including an electronic key such as a card key) which differ in accordance with the operator or the operator group. The operator identification device 22 transmits the signal (operator identification signal) which differs in accordance with the key which has been used to the control device 10 for the wind power generation device 11.

It is assumed that the different keys (keys 1, 2, 3) as physical media are used to the operation target device 23 having one key hole. The operator identification device 22 has a mechanism capable of identifying the key that has been used for unlocking or locking from the operation of the pin of one of those keys 1, 2, 3 as different physical media.

Compared with the first example, this example does not need a plurality of operation target devices of the same type, thus promoting simplification of the wind power generation system. Third Example

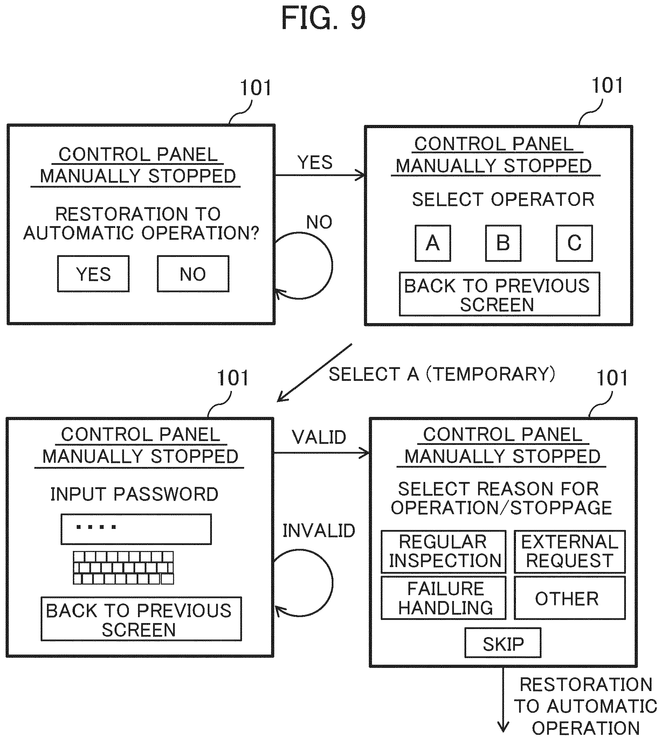

Fig. 9 is a view showing a transitional state on the operation screen of the operator identification device as a third example according to another embodiment of the present invention. This example is different from the first and the second examples in that the operator identification device 2 is provided for a console 101 of the control device 10.

The operator identification device 22 according to the example is installed in the console 101 of the control device 10 as software. For example, a touch panel may be used for the console 101. The transitional state on the operation screen of the console 101 as shown in Fig. 9 is expected to occur when the operation is manually stopped on-site, and the operation is restored after finishing the work.

As the upper left view of Fig. 9 shows, the operation screen on the console 101 displays that the operation has been "MANUALLY STOPPED". The screen will continue displaying to request the operator to input whether or not the automatic operation is to be restored.

After the worker (operator) finishes the work, the operator selects "YES" button on the operation screen of the console 101 for restoration to the automatic operation. The screen then undergoes the transition to the operator selection screen as shown by the right upper view of Fig. 9. The operator selection screen displays the request for selecting the operator, that is, the message "SELECT OPERATOR", and buttons of operators "A", "B", "C", any one of which may be designated. Assuming that the operator "A" button is touched on the display, the screen undergoes the transition to the one requesting input of the password of the selected operator. In this example, it is exemplified that three operators, that is, operators "A", "B", "C" are displayed. It is also possible to set the appropriate number of the operators to be selectively displayed on the screen.

On the password input screen as shown by a lower left view of Fig. 9, if the input password of the operator "A" matches that of the operator "A" (valid), the screen undergoes the transition to the one requesting selection of the reason for operating or stopping of the work as shown by a lower right view of Fig. 9. Meanwhile, if the input password of the operator "A" does not match that of the operator "A" (invalid), the password input screen as shown by the lower left view of Fig. 9 is kept displayed.

Referring to the lower right view of Fig. 9, on the screen requesting selection of the reason for operating or stopping the work, buttons of "REGULAR INSPECTION", "FAILURE HANDLING", "EXTERNAL REQUEST", and "OTHER" are displayed, and a "SKIP" button or a "BACK TO PREVIOUS SCREEN" button is displayed below those buttons. Upon selection of the reason or touching of the "SKIP" button, the wind power generation device 11 restores to the automatic operation. Alternatively, if the "BACK TO PREVIOUS SCREEN" button is displayed instead of the "SKIP" button, it is possible to request the operator to input the reason for operating the work. In the embodiment, the buttons of "REGULAR INSPECTION", "FAILURE HANDLING", "EXTERNAL REQUEST", and "OTHER" are displayed for the reason for operating and stopping the work as an exemplified case. It is further possible to display the button of "OUT OF ORDER" or any other reason for operating or stopping the work as needed in the non-restrictive manner. It is possible to add the function that allows voice communication with the specific external contact so that the reason for operating the work is orally registered.

In the example, the operator identification device is implemented by software so that the device cost reduction is expectable. As the operator selection (user authentication) is requested upon restoration from the manual stopping to the automatic operation, no delay occurs upon operation from the automatic operation to the manual stopping, resulting in rapid correspondence to the demand for stopping the wind power generation device 11. It is preferable to stop the wind power generation device 11 for securing safety of the worker (operator). The use of software allows provision of the additional function for requesting selection and input of the reason for operating or stopping the work in addition to those of the first and the second examples. Upgrading of the software exhibits expandability such as the additional function even after starting the operation of the wind power generation device 11.

As described above, the embodiment of the present invention, and the first to the third examples of the operator identification device 22 have been described as exemplified cases. It is possible to calculate the operating rate by excluding the operating rate derived from the specific operator such as the power generation provider and the power generation device manufacturer.

The present invention is not limited to the examples as described above, but includes various modifications. For example, the examples are described in detail for readily understanding of the present invention which is not necessarily limited to the one equipped with all structures as described above. It is possible to replace a part of the structure of one example with the structure of another example. The one example may be provided with an additional structure of another example.

### List of Reference Signs

- 1:: wind power generation system,
- 2:: power system,
- 3:: interconnection disconnector or circuit breaker,
- 4:: interconnection voltmeter,
- 5:: interconnection ammeter,
- 6:: interconnection transformer,
- 8:: remote monitoring-control device,
- 9:: operating terminal,
- 10, 10a, 10b:: control device,
- 11, 11a, 11b:: wind power generation device,
- 12:: disconnector or circuit breaker,
- 13:: voltmeter,
- 14:: ammeter,
- 15:: transformer,
- 16:: blade,
- 17:: tower,
- 18:: nacelle,
- 19:: speed increaser,
- 20:: generator,
- 21:: power converter,
- 22, 22a, 22b:: operator identification device,
- 23, 23a, 23b:: operation target device,
- 24:: device discriminator,
- 81:: control signal generator,
- 82:: event log integrating processor,
- 83:: event log,
- 84:: log correction data,
- 85:: operation condition log,
- 86:: operating rate calculation unit,
- 87:: display processor,
- 88:: process set unit,
- 91:: display screen,
- 101:: console

## Claims

1. A wind power generation system comprising:
a wind power generation device for generating power utilizing rotation energy derived from rotation of a blade;
a control device for controlling the wind power generation device; and
a remote monitoring-control device for monitoring and controlling an operation state of at least one or more wind power generation devices, wherein:
the remote monitoring-control device is mutually communicable with at least one or more operating terminals;
the wind power generation device includes an operator identification device for acquiring information for identifying an operator who operates the wind power generation device;
the remote monitoring-control device includes:
an event log integrating processor that integrates the operator identification information from the operator identification device and an operation content, which are received by the control device, and an operation content and information of the operator, which are input from the operating terminal for generating an event log signal; and
an operating rate calculation unit for calculating an operating rate by excluding a cause of decreasing the operating rate as a result of change in an operation mode plan including a power generation stopping operation and a fallback operation, performed by a specific operator based on accumulated operation condition signals of the wind power generation device, transmitted from the control device, the event log signal, and a preset operating rate calculation definition which is variable by the operating terminal.

2. The wind power generation system according to claim 1, wherein the remote monitoring-control device includes an event log which stores an event log signal generated by the event log integrating processor, an operation condition log which stores the operation condition signal, and a process set unit which stores the preset operating rate calculation definition which is variable by the operating terminal.

3. The wind power generation system according to claim 2, wherein the event log stores at least an event item, a date of occurrence and restoration of an event corresponding to the event item, the operator identification information from the operator identification device, or an operator of the event by which the operator is identified through an authentication process in accessing from the operating terminal to the remote monitoring-control device in correlation with one another.

4. The wind power generation system according to claim 3, wherein:
the remote monitoring-control device includes a display processor;
the display processor displays a content to be stored in the event log on a display screen of a display unit of the operating terminal; and
when the operator relevant to one of occurrence and restoration of the event corresponding to the event item is corrected via the operating terminal, the operator relevant to the other of the occurrence or the restoration of the corresponding event is changed to be identical to the corrected operator.

5. The wind power generation system according to claim 4, wherein:
the remote monitoring-control device includes a log correction data;
the log correction data store the corrected operator relevant to the occurrence and the restoration of the event corresponding to the event item; and
the event log stores the operator before correction in correlation with the event of the event item in an uneditable format.

6. The wind power generation system according to claim 4, wherein the operation condition log stores operation condition signals of the respective wind power generation devices, which are transmitted from the control device at predetermined time intervals in correlation with a date at which the operation condition signal is acquired, and the operation condition signal includes at least an output of the wind power generation device, a wind speed as information relating to a wind condition, and a rotational speed of the blade.

7. The wind power generation system according to claim 6, wherein:
the output of the wind power generation device is an average power generation output of the wind power generation device at the predetermined time interval;
the wind speed as the information relating to the wind condition is an average wind speed at the predetermined time interval; and
the rotational speed of the blade is an average rotational speed at the predetermined time interval.

8. The wind power generation system according to any one of claims 4 to 7, wherein:
the display processor displays a first display region on the display screen of the display unit of the operating terminal based on the information to be stored in the event log and the operation condition log; and
the first display region is capable of setting addition of an operation condition category indicating an operation condition of the wind power generation device, including at least a standard operation, a fallback operation, a windmill specification, an adjustment state, and a failure state for calculating the operating rate performed by the operating rate calculation unit.

9. The wind power generation system according to claim 8, wherein:
the display processor displays a second display region on the display screen of the display unit of the operating terminal; and
the second display region is capable of setting whether or not the event log signal of which operator is included for calculating the operating rate performed by the operating rate calculation unit.

10. The wind power generation system according to claim 9, wherein:
the display processor displays the operating rate at the predetermined time interval to be calculated based on the operator's event log signal that has been set to be included at least for calculating the operating rate, and the operation condition signal to be stored in the operation condition log on the display screen of the display unit of the operating terminal; and
at least one of the operation condition signals to be stored in the operation condition log, and the operation condition category set to be added for calculating the operating rate, both of which are displayed in a time-series graph.

11. The wind power generation system according to claim 10, wherein:
the display processor displays a data cursor in the time series graph on the display screen of the display unit of the operating terminal, and a numerical value as the at least one of the operation condition signals at a date designated by the data cursor.

12. The wind power generation system according to claim 11, wherein:
the wind power generation device includes a plurality of operation target devices of the same type, which are allowed to be unlocked and locked only by different keys preliminarily assigned to the operators, respectively;
the operator identification device includes a device discriminator; and
the device discriminator determines the operation target device that has been unlocked or locked in response to reception of an unlock or a lock signal from the operation target device, and transmits the operator identification information to the control device.

13. The wind power generation system according to claim 12, wherein the remote monitoring-control device preliminarily receives an operator's reservation to unlock the operation target device, and confirms matching based on the operator who has reserved to unlock, and the operator identification information received from the device discriminator via the control device.

14. The wind power generation system according to claim 13, wherein the operation target device is a tower door, or a disconnector or a circuit breaker provided for the wind power generation device.

15. The wind power generation system according to claim 11, wherein:
the wind power generation device includes an operation target device which is allowed to be unlocked and locked by different keys preliminarily assigned to the operators, respectively; and
the operator identification device is disposed in the operation target device, and transmits the operator identification information corresponding to the key used for unlocking or locking the operation target device to the control device.

16. The wind power generation system according to claim 15, wherein the operation target device is a tower door, or a disconnector or a circuit breaker provided for the wind power generation device.

17. The wind power generation system according to claim 11, wherein:
the operator identification device is a console provided for the control device; and
when restarting the wind power generation device for power generation after finishing an on-site work, a display screen of the console displays an operator selection screen requesting an input of information for identifying the operator, a password input screen requesting the operator to input a password after inputting the selected operator, and a reason for operation or stoppage selection screen requesting the operator to input the reason for operation or stoppage of the work after authentication.
